# EUROPEAN PATENT SPECIFICATION

(11) **EP 4 115 102 B1**
(45) Date of publication and mention of the grant of the patent: **21.08.2024**
(21) Application number: 20817431.8
(22) Date of filing: 09.12.2020
(51) Int. Cl.: F16K 7/17, F16K 31/385, F16K 47/02, F16K 1/42

(54) **VALVE**
VENTIL
VANNE

(30) Priority: 02.03.2020 EP 20160328
(43) Date of publication of application: 11.01.2023
(73) Proprietor: HUSQVARNA AB, 561 82 Huskvarna (SE)
(72) Inventor: ARNDT, Wolfgang, 89079 Ulm (DE); LAIBLE, Fritz, 89176 Asselfingen (DE)
(74) Representative: Finkele, Rolf
(86) International application number: PCT/EP2020/085297
(87) International publication number: WO 2021/175471

(56) References cited:
- DE-A1- 102008 009 714
- US-A- 2 993 676
- US-A- 3 282 556
- US-A- 3 379 406
- US-A- 5 299 775
- US-A1- 2013 009 086
- US-A1- 2015 323 081
- US-B1- 6 254 057

## Description

### TECHNICAL FIELD

The present disclosure relates to a valve. More specifically, the present disclosure relates to a valve which allows easy and safe control of a fluid flow as per the requirements.

### BACKGROUND

A valve is a mechanical device that regulates, directs or controls a fluid flow (such as gases, liquids, fluidized solids, or slurries) by opening, closing, or partially obstructing various liquid channels. For example, the valve may be used in fields, industries, residences to control water for various purposes such as controlling processes, irrigation, washing, among others.

However, there may be instances where working with uniform geometry, or standard designs or construction of a valve may close the liquid channel relatively quickly, or at times in an unsafe manner. Immediate closing or opening of the valve may not be effective to reduce or check undesired pressure shocks. Intense pressure shocks may affect various parts of the valve, at times leading to failure or process upset. This may result in deformation or malfunctioning of various parts of the valve.

An example of a valve is provided in WIPO patent application WO 2,004,026,721 (hereinafter referred to as '721 reference). The '721 reference provides a membrane valve. The membrane valve includes a slit membrane. The membrane valve further includes a cap-shaped holding element. The holding element is associated with a receiving region of the membrane. The holding element is connected to the membrane in a positive locking manner or in a material fit. The holding element is formed inside a closing element in order to hold in an overlapping or locking manner on a peripheral outer edge side. However, the '721 reference falls short of providing an ergonomic and user-friendly arrangement which allows a safe and less shock-prone operation of the valve.

Another example of a valve is provided in US patent number 3,379,406 (hereinafter, referred to as '406 reference). The '406 reference discloses a diaphragm pilot-controlled valve. The valve includes a relatively thick seating member with a wedge-shaped cross-section.

Another example of a valve is provided in US patent number 5,299,775 (hereinafter, referred to as '775 reference). The '775 reference discloses a pilot operated diaphragm valve. The valve includes a main control valve assembly engages with a main valve seat. The main valve seat is angled such that the main control valve assembly moves up or down relatively evenly until the main control valve assembly contacts the angled main valve seat.

Another example of a valve is provided in US publication number 2013/0,009,086 (hereinafter, referred to as '086 preference), which discloses a valve according to the preamble of independent claim 1.

The '086 reference discloses an eccentric diaphragm irrigation valve. The valve includes a diaphragm having a valve seat engaging portion that cooperates with a valve seat to control a flow through the valve. The diaphragm includes a web having an inlet side that is thicker than an outlet side of the web.

Another example of a valve is provided in US publication number 2015/0,323,081 (hereinafter, referred to as '081 reference). The '081 reference discloses a shut-off valve having a diaphragm that engages a valve seat part for opening and closing of the valve.

Another example of a valve is provided in US patent number 3,282,556 (hereinafter, referred to as '556 reference). The '556 reference discloses a pilot-controlled diaphragm valve of the type in which the valve closes against a pressure and is maintained closed by equalization of unit pressures on opposite sides of a diaphragm. The valve includes a throttling button that is not subjected to swelling to prevent the button from binding within a valve seat.

Thus, there is a need for an improved valve which allows safe, convenient and trouble-free operation of the valve.

### SUMMARY

In view of the above, it is an objective of the present invention to solve or at least reduce the drawbacks discussed above. The objective is at least partially achieved by the valve according to independent claim 1.

The valve is disposed in a liquid channel. The valve includes a valve body. The valve includes a valve cover which at least partially encloses the valve body. The valve includes a valve seat which is disposed within the valve body. The valve further includes a membrane received on the valve seat. The membrane moves between an open position allowing a liquid flow through the liquid channel and a closed position disallowing the liquid flow through the liquid channel. The valve includes an elastic element which is disposed between the valve body and the membrane. The elastic element biases the membrane in the closed position. The membrane has a non-uniform cross-sectional profile. The non-uniform cross-sectional profile of the membrane helps in optimizing (generally delaying) closing time of the valve. This further helps in reduction of pressure/hydraulic shocks involved during opening/closing of the valve. Thus, the present disclosure provides a simple, efficient, and less shock-prone opening and closing of the valve.

According to an embodiment of the present invention, the elastic element is a compression spring. This helps in providing a well-defined positional configuration to the membrane in the open and the closed position.

According to an embodiment of the present invention, the membrane includes a reinforcement portion. The reinforcement portion may provide support and mechanical assistance to the membrane.

According to an embodiment of the present invention, the reinforcement portion and the membrane form an integral part. This may provide strength to the valve. This may further lead to less chances of breakage or damage of the valve.

According to an embodiment of the present invention, at least one of the membrane and the reinforcement portion has a zigzag shape. This may ensure that at least one of the membrane and the reinforcement portion may be provided with desired non-uniformity for optimal operation of the valve.

According to an embodiment of the present invention, the reinforcement portion is made up of materials having higher strength relative to materials required for making the membrane. This may allow the reinforcement portion better able to handle different motions of the membrane. Moreover, difference in strength of the materials for the reinforcement portion and the membrane may lead to better efficiency, service lifetime, among operational benefits.

According to an embodiment of the present invention, at least one of the membrane and the reinforcement portion is manufactured from a 2K molding process. The 2K molding process may help in cost reduction and process improvement. More particularly, this may also help in reducing assembly time and associated resources.

According to an embodiment of the present invention, at least one of the membrane and the reinforcement portion is manufactured by 3-D printing. Use of three-dimensional printing (alternatively, 3D printing) may provide versatility of using different materials along with lower lead-time in manufacturing and design of the membrane.

According to an embodiment of the present invention, at least one of the membrane and the reinforcement portion is manufactured from an elastomeric material. The elastomeric material may provide the membrane with characteristics features such as elasticity, flexibility, cost efficiency, and some resistances such as against heat, or vibrations as per the requirements of the common users.

According to an embodiment of the present invention, the elastomeric material is silicon. Due to the inert nature of silicon, at least one of the membrane and the reinforcement portion may avoid susceptibility to corrosion leading to relatively a longer service life.

According to an embodiment of the present invention, the membrane is adhesively bonded to the reinforcement portion by means of a bonding agent. The bonding agent allows to desirably engage the membrane with the reinforcement portion.

According to an embodiment of the present invention, the reinforcement portion receives the membrane therein. The reinforcement portion provides support to the membrane which further allows desired movement (such as lifting) of the membrane.

According to an embodiment of the present invention, the reinforcement portion rests centrally on the membrane. This allows better movement (such as uplifting) of the membrane, such as during actuation of a handle/button/switch.

According to an embodiment of the present invention, at least one of the membrane and the reinforcement portion allow partial liquid flow through the liquid channel. This allows ease of control of a rate of the fluid flow within the valve body.

According to an embodiment of the present invention, the membrane or the reinforcement portion is manufactured by three-dimensional printing. Use of three-dimensional printing (alternatively, 3D printing) provides versatility of using different materials along with low lead-time in manufacturing and design of the hose box, the bracket member, the retaining member, the stem member, and/or the anchor member.

According to an embodiment of the present invention, a user of the valve is provided with a data file having pre-stored instructions to print the valve's membrane or the reinforcement portion by a three-dimensional printer. As such, a variety of customization options may be provided for the membrane or the reinforcement portion.

According to an embodiment of the present invention, the membrane or the reinforcement portion is presented in digital format. The membrane or the reinforcement portion may be made available in the digital format as per compatibility with state-of-the-art technologies among other considerations, such as security, user convenience, and the like.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a cross-sectional view of a valve disposed in a liquid channel, in accordance with an aspect of the present disclosure;
**FIG. 2** shows a detailed front cross-sectional view of the valve disposed in the liquid channel, in accordance with an aspect of the present disclosure;
**FIG. 3** shows an exploded view of a membrane of the valve, in accordance with an aspect of the present disclosure;
**FIGS. 4** shows a cross-sectional view of the valve in an open position, in accordance with an aspect of the present disclosure;
**FIG. 5** shows a cross-sectional view of the valve in a closed position, in accordance with another aspect of the present disclosure;
**FIG. 6A** shows a perspective view of the membrane, in accordance with another aspect of the present disclosure;
**FIG. 6B** shows a cross-sectional view of the membrane, in accordance with another aspect of the present disclosure;
**FIG. 6C** shows a side view of the membrane, in accordance with another aspect of the present disclosure; and
**FIG. 7** shows a sectional view of a valve seat, in accordance with another aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

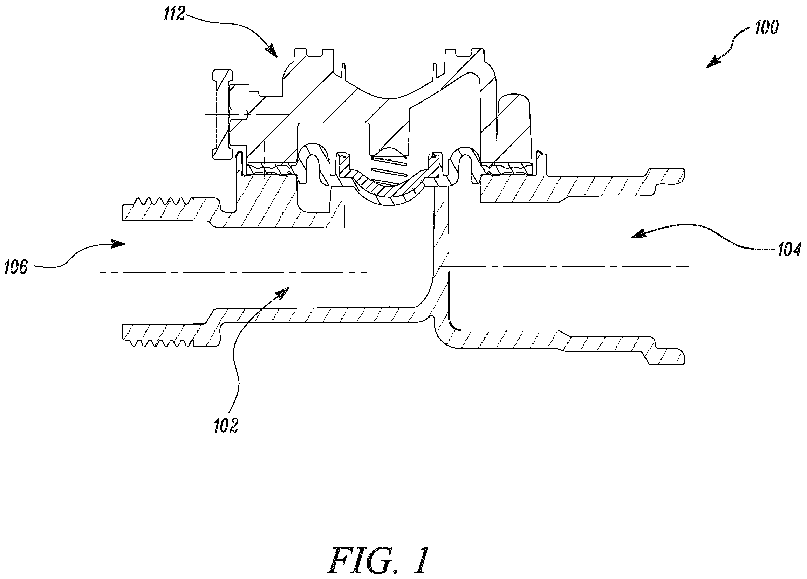

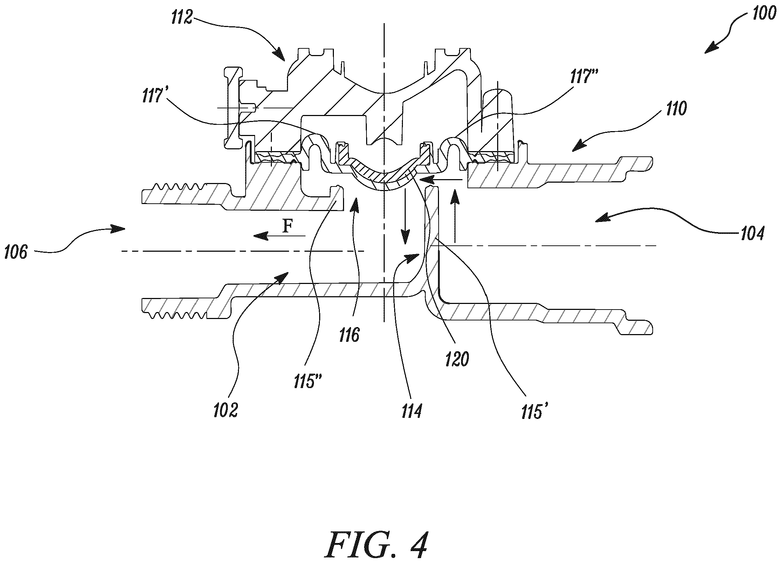

**FIG. 1** illustrates a cross-sectional view of a valve **100.** The valve **100** of the present disclosure is a mechanical device which allows to direct, regulate or control flow of a fluid, by opening, closing or partial blocking of a liquid channel. The valve **100** may be used in fields, industries, residences to control water for various purposes such as controlling processes, irrigation, washing, among others. The valve **100** is disposed in a liquid channel **102.** The liquid channel **102** is a passage for a liquid flow (shown in **FIG.4****).** The liquid channel **102** includes an inlet **104.** The inlet **104** may be connected to any water source such as, but not limited to, a tap, a tank, and a hose. Further, the liquid channel **102** includes an outlet **106.** The outlet **106** may allow to eject the liquid received from the inlet **104.** The liquid channel **102** may be replaced by any other channel such as a gas channel, a slurry channel, a channel for fluidized solids and the like. The liquid channel **102** may be widely usable in outdoor or indoor applications such as gardens, buildings, kitchens, parks etc.

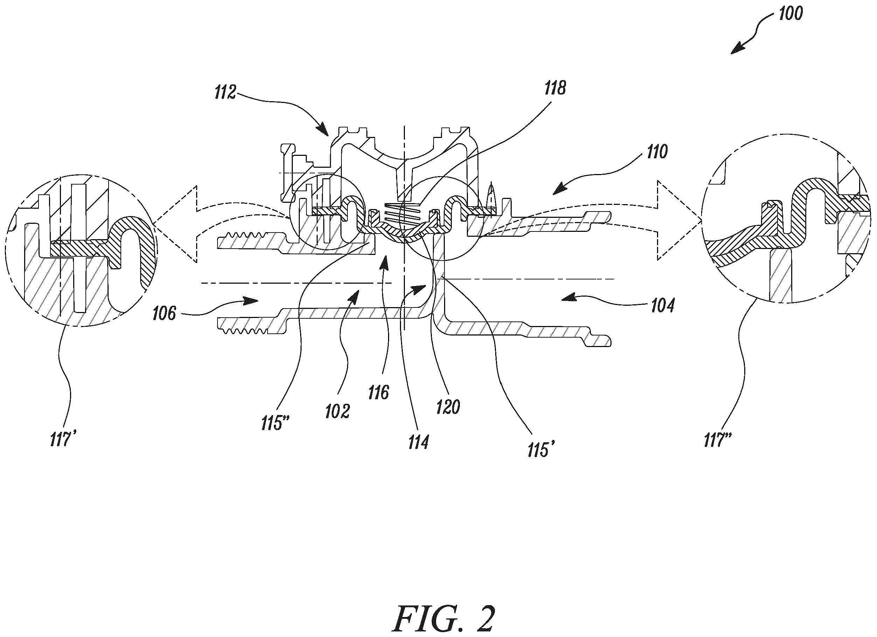

**FIG. 2** illustrates a detailed front cross-sectional view of the valve **100** disposed in the liquid channel **102.** The valve **100** includes a valve body **110.** The valve **100** further includes a valve cover **112.** The valve cover **112** at least partially encloses the valve body **110.** A valve seat **114** is disposed within the valve body **110.** The valve **100** further includes a membrane **116.** The membrane **116** has a non-uniform cross-sectional profile. In this embodiment, the non-uniform cross-sectional profile is shown by the membrane **116** which includes roll-off areas **117', 117".** The roll-off areas **117', 117"** are different from each other. The roll-off areas **117', 117"** form an uneven surface. Such as, the roll-off area **117'** seems more protruding as relative to the roll-off area **117".** Further, the membrane **116** is received on the valve seat **114.** The valve seat **114** further includes a right shoulder **115'.** Moreover, the valve seat **114** includes a left shoulder **115".** An elastic element **118** is disposed between the valve body **110** and the membrane **116.**

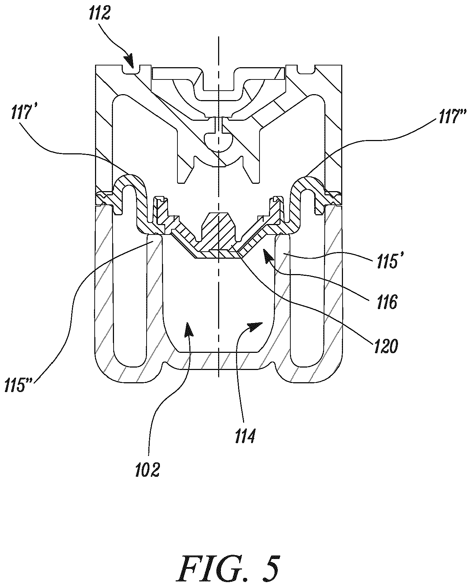

In this embodiment, the elastic element **118** is a compression spring, however the elastic element **118** may be any elastic means (such as bellows) as used or known in the art. In other embodiments, the elastic element **118** may be an extension spring, a torsion spring, and a constant force spring. The elastic element **118** helps in providing a well-defined positional configuration to the membrane **116** in an open position and a closed position (shown in **FIGS. 4** and **5** respectively).

As illustrated in **FIG.2****,** the membrane **116** includes a reinforcement portion **120.** The reinforcement portion **120** provides mechanical assistance to the membrane **116.** The reinforcement portion **120** allows better movement (such as uplifting) of the membrane **116,** such as during actuation of a handle/button/switch. The reinforcement portion **120** receives the membrane **116** therein. The reinforcement portion **120** provides support to the membrane **116** which further allows desired movement (such as lifting) of the membrane **116.**

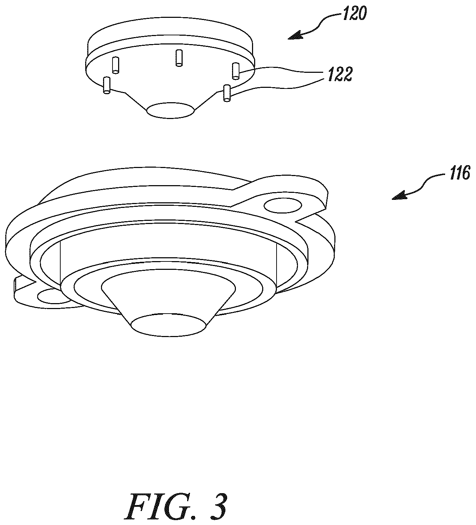

**FIG. 3** illustrates an exploded view of the membrane **116** of the valve **100.** The reinforcement portion **120** may have some protrusions **122** which may get fitted with grooves (not shown) of the membrane **116.** In some embodiments, at least one of the membrane **116** and the reinforcement portion **120** may be manufactured from a 2K molding process. The 2K molding process may help in cost reduction and process improvement. More particularly, this may also help in reducing assembly time and associated resources. In some other embodiments, the membrane **116** and the reinforcement portion **120** may be manufactured from any one of a process such as a blow molding, a compression molding, and a rotational molding etc.

At least one of the membrane **116** and the reinforcement portion **120** may be manufactured from an elastomeric material. The elastomeric material provides the membrane **116** with characteristic features such as elasticity, flexibility, cost efficiency. The elastomeric material may also provide some resistances such as against heat, or vibrations as per the requirements of the common users. In the present embodiment, the elastomeric material is silicon. Due to the inert nature of silicon, at least one of the membrane **116** and the reinforcement portion **120** may avoid susceptibility to corrosion leading to relatively a longer service life. In other embodiments, the elastomeric material may be a natural rubber, a synthetic rubber, a nitrile rubber, a urethane rubber, a chloroprene rubber, an EVA rubber and the like.

The reinforcement portion **120** may be made of materials having higher strength relative to materials required for making the membrane **116.** The reinforcement portion **120** may be made up of any metal such as iron, steel, nickel, aluminum and the like. This may allow the reinforcement portion **120** better able to handle different motions of the membrane **116.** Moreover, difference in strength of the materials for the reinforcement portion **120** and the membrane **116** may lead to better efficiency, service lifetime, among operational benefits. The membrane **116** may be removably assembled with the reinforcement portion **120.**

In some embodiments, the membrane **116** and the reinforcement portion **120** may be manufactured from the 2K molding process in a combined form, thus producing one integral part. This may provide strength to the valve **100.** This may further lead to less chances of breakage or damage of the valve **100.** Additionally, or alternatively, the membrane **116** may be manufactured from the 2K molding process and then the completed membrane **116** may be located on the reinforcement portion **120** (also prepared from the 2K silicon molding). In other embodiments, the membrane **116** and the reinforcement portion **120** may be assembled after manufacturing from the different molding processes.

The membrane **116** may be adhesively bonded to the reinforcement portion **120** by means of a bonding agent. The bonding agent may desirably engage the membrane **116** with the reinforcement portion **120.** The membrane **116** and the reinforcement portion **120** may be engaged by using thermoplastic elastomer (TPE). In other embodiments, the membrane **116** and the reinforcement portion **120** may be connected by using another adhesive material such as liquid silicon rubber (LSR). The membrane **116** may also be cohesively bonded to the reinforcement portion **120.** In other embodiments, the membrane **116** and the reinforcement portion **120** may be assembled by snap connections. In some embodiments, the membrane **116** and the reinforcement portion **120** may be glued, screwed, tied with a thread and the like. In yet other embodiments, the membrane **116** and the reinforcement portion **120** may be connected magnetically.

In some embodiments, at least one of the membrane **116** and the reinforcement portion **120** may be manufactured using any material, such as polymers, metals, plastics, and the like. This provides the membrane **116** with characteristic features such as flexibility, cost efficiency, heat resistance and like properties. The membrane **116** may be manufactured using any process, such as casting, molding, forging, fabrication, and the like. In yet other embodiments, the membrane **116** may be manufactured by three-dimensional printing (also known as additive manufacturing or 3D printing). Use of three-dimensional printing (alternatively, 3D printing) provides versatility of using different materials along with low lead-time in manufacturing and design of the membrane **116.**

In the present embodiment, the membrane **116** and the reinforcement portion **120** may operate in a preferable range of about 0.5 to 16 bar. In some applications, the pressure may surge up to about 50 bar. Further, the membrane **116** and the reinforcement portion **120** may work optimally in a certain temperature range (such as 0-60°C). Moreover, the storage temperature for the membrane **116** and the reinforcement portion **120** may be from -20 to 60°C. The membrane **116** and the reinforcement portion **120** may be resistant to vibrations.

**FIG. 4** illustrates a cross-sectional view of the valve **100** in the open position. The membrane **116** moves between the open position and the closed position. The open position allows a liquid flow **F** through the liquid channel **102.** The valve **100** may be provided with a handle or an electro-mechanical apparatus (not shown). On actuating the handle, the reinforcement portion **120** may lift the membrane **116** by a certain distance (preferably 2.5 mm in some embodiments). The lifting of the membrane **116** with the help of the reinforcement portion **120** allows the liquid flow **F** to pass through the liquid channel **102.** The elastic element **118** is not from clarity and explanation considerations.

**FIG. 5** illustrates a cross-sectional view of the valve **100** in the closed position. In the closed position, the valve **100** disallows the liquid flow **F** through the liquid channel **102.** The valve **100** remains in the closed position until the handle is not engaged or acted upon.

In other embodiments, a button/switch may be provided with the valve **100.** On actuating the button/switch, a valve mechanism works. Initial actuation of the button/switch may allow entry of the fluid inside the liquid channel **102** through the inlet **104.** This may further pressurize the membrane **116** and the reinforcement portion **120.** The pressurized reinforcement portion **120** may lift the membrane **116** up therefore allowing the fluid to flow. On second actuation, the valve **100** may get closed therefore resisting the flow of liquid.

In some embodiments, at least one of the membrane **116** and the reinforcement portion **120** allow partial liquid flow **F** through the liquid channel **102.** This allows ease of control of a rate of the fluid flow within the valve body 110.

In some other embodiments, the valve **100** may be controlled automatically. The valve **100** may be provided with a control unit. The control unit may be configured to actuate actuators/sensors of the valve **100.** Further, actuation of the actuators/sensors may allow the state (i.e. the open and closed position) of the liquid flow **F** within the valve **100.**

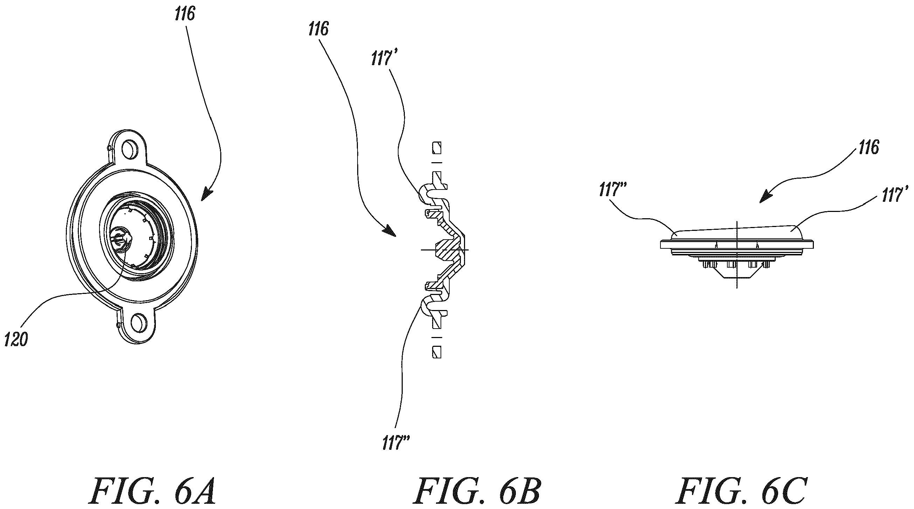

**FIG.6A** illustrates a perspective view of the membrane **116.** The membrane **116** may have any one of shapes such as a circular shape, an oval shape, and the like. The reinforcement portion **120** may rest centrally on the membrane **116.** The membrane **116** shows a non-uniform cross-sectional profile. In other embodiments, the non-uniform cross-sectional profile may be defined as a zig-zag configuration of the membrane **116.** In one embodiment the central portion of the membrane **116,** in particularly the section that comes to rest on the valve seat **114,** could have an increase wall thickness compared to its roll-off areas **117'. 177".** This will make the membrane to improve its absorption properties in case of hydraulic shocks.

**FIG. 6B** illustrates a cross-sectional view of the membrane **116** which has the non-uniform cross-sectional profile. The non-uniform cross-sectional profile of the membrane **116** is described by the roll-off areas **117', 117"** of the membrane **116.** More particularly, the roll-off areas **117', 117"** have different geometries or wall thickness. The elastic element **118** is engaged with the reinforcement portion **120.** The elastic element **118** biases the membrane **116** in the closed position. The elastic element **118** is not shown in some of the embodiments from clarity and explanation considerations.

**FIG. 6C** illustrates a side view of the membrane **116.** The membrane **116** has the roll-off areas **117', 117".** In some other embodiments, the roll-off areas **117', 117"** of the membrane **116** may be obtained by use of some accessories/attachments with the membrane **116** to provide the uneven surface. The attachments/ accessories may be removably coupled to a membrane of a conventional valve (not shown). The attachments/accessories may be connected temporarily or permanently. The temporary connection may be done by gluing, screwing, tying with threads and the like. The permanent connection may be done by welding, riveting and any other fabrication technique which is used or known in the art.

The non-uniform cross-sectional profile may be realized by different lengths of the membrane **116** and the reinforcement portion **120.** The non-uniform cross-sectional profile of the membrane **116** may produce an uneven axial closing movement. The non-uniform cross-sectional profile of the membrane **116** may increase closing time of the valve **100.** Hence, increase in the closing time of the valve **100** may eventually lead to reduction of hydraulic/pressure shocks.

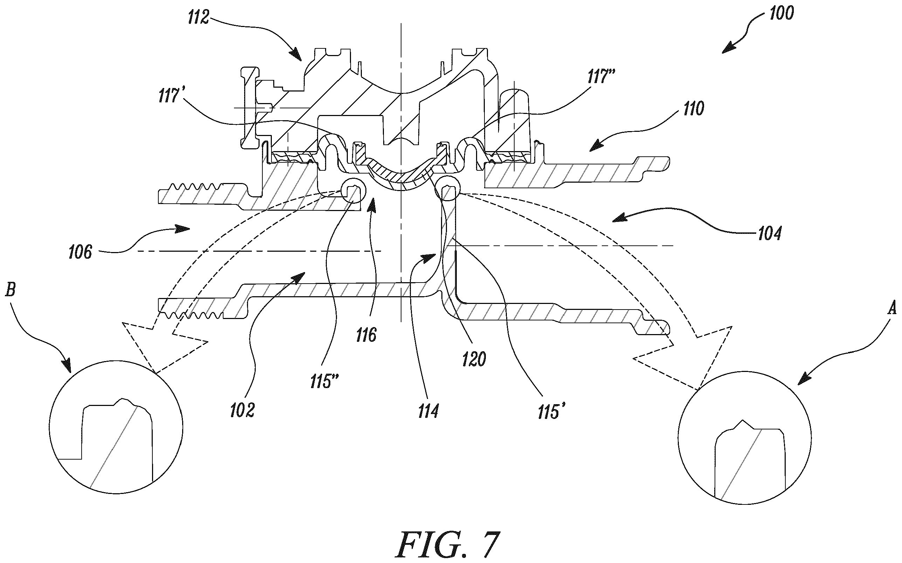

**FIG. 7** illustrates a sectional view of the valve seat **114.** The elastic element **118** is not shown for clarity and explanation considerations. The valve seat **114** also has an uneven geometry to match or get locked with the membrane **116** and the reinforcement portion **120.** The right shoulder **115'** of the valve seat **114** includes a first profile **A.** Further, the left shoulder **115"** includes a second profile **B.** In this embodiment, the first profile **A** is a peak like structure. Moreover, the second profile **B** is also a peak like structure. The first profile **A** includes more slanting peak with respect to the second profile **B.** The right shoulder **115'** and the left shoulder **115"** of the valve seat **114** include the first profile **A** and the second profile **B** respectively and have different geometries to support or supplement the role of the non-uniform cross-sectional profile. In some embodiments, the first profile **A** and the second profile **B** may include some other structures which provide the valve seat **114** with the uneven geometry.

According to the invention, the right shoulder **115'** and the left shoulder **115"** of the valve seat **114** have different wall thickness, length or width. The shape of the valve seat **114** may be one or more of a circular shape, an oval shape and the like. In other embodiments, the valve seat **114** may have a zig-zag shape. In yet another embodiment, the valve seat **114** may also have removably attached accessories/attachments which may allow conversion of a conventional valve seat into the valve seat **114** of the present disclosure. In some embodiments, the conventional valve seat may be provided with a rubber extension/protrusion which may engage with the membrane **116** and the reinforcement portion **120** during operation.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Valve
- **102**: Liquid Channel
- **104**: Inlet
- **106**: Outlet
- **110**: Valve Body
- **112**: Valve cover
- **114**: Valve Seat
- **115'**: Right Shoulder
- **115"**: Left Shoulder
- **116**: Membrane
- **117', 117"**: Roll-off Areas
- **118**: Elastic Element
- **120**: Reinforcement Portion
- **122**: Protrusions
- **F**: Liquid Flow
- **A**: First Profile
- **B**: Second Profile

## Claims

1. A valve **(100)** adapted to be disposed in a liquid channel **(102)** comprising:
a valve body **(110);**
a valve cover **(112)** adapted to at least partially enclose the valve body **(110);**
a valve seat **(114)** disposed within the valve body **(110);**
a membrane **(116)** adapted to be received on the valve seat **(114),** wherein the membrane **(116)** is adapted to move between an open position allowing a liquid flow **(F)** through the liquid channel **(102)** and a closed position disallowing the liquid flow **(F)** through the liquid channel **(102);** and
an elastic element **(118)** disposed between the valve cover **(112)** and the membrane **(116),** wherein the elastic element **(118)** is adapted to bias the membrane **(116)** in the closed position;
wherein the membrane **(116)** has a non-uniform cross-sectional profile; and
wherein the non-uniform cross-sectional profile of the membrane **(116)** includes roll-off areas **(117', 117"),** the roll-off areas **(117', 117")** having different geometry or wall thickness, wherein a first roll-off area **(117')** is more protruding as relative to a second roll-off area **(117");**
**characterized in that:**
the valve seat (114) further includes a right shoulder (115') and a left shoulder (115"), wherein the right shoulder (115') includes a first profile and the left shoulder (115") includes a second profile such that the right shoulder (115') and the left shoulder (115") have different geometries to support or supplement the role of the non-uniform cross-sectional profile, and
the right shoulder (115') and the left shoulder (115") of the valve seat (114) have different wall thickness, length or width.

2. The valve **(100)** of claim 1, wherein a central portion of the membrane **(116)** has an increased wall thickness compared to the first and second roll-off areas **(117', 117").**

3. The valve **(100)** of claim 1 or 2, wherein the membrane **(116)** further includes a reinforcement portion **(120).**

4. The valve **(100)** of claim 3, wherein the reinforcement portion **(120)** and the membrane **(116)** form an integral part.

5. The valve **(100)** of claim 3 or 4, wherein at least one of the membrane **(116)** and the reinforcement portion **(120)** has a zigzag shape.

6. The valve **(100)** of any one of the claims 3 to 5, wherein the reinforcement portion **(120)** is made up of materials having higher strength relative to materials required for making the membrane **(116).**

7. The valve **(100)** of any of the claims 3 to 6, wherein at least one of the membrane **(116)** and the reinforcement portion **(120)** is manufactured from a 2K molding process.

8. The valve **(100)** of any one of claims 3 to 7, wherein at least one of the membrane **(116)** and the reinforcement portion **(120)** is manufactured from an elastomeric material.

9. The valve **(100)** of any one of claims 3 to 8, wherein the membrane **(116)** is adhesively bonded to the reinforcement portion **(120)** by means of a bonding agent.

10. The valve **(100)** of any one of claims 3 to 9, wherein the reinforcement portion **(120)** receives the membrane **(116)** therein.

11. The valve **(100)** of any one of claims 3 to 10, wherein the reinforcement portion **(120)** rests centrally on the membrane **(116).**

12. The valve **(100)** of any one of claims 3 to 11, wherein at least one of the membrane **(116)** and the reinforcement portion **(120)** allow partial liquid flow **(F)** through the liquid channel **(102).**

## Patentansprüche

1. Ventil **(100),** das angepasst ist, um in einem Flüssigkeitskanal (102) angeordnet zu sein, umfassend:
einen Ventilkörper **(110);**
einen Ventildeckel **(112),** der angepasst ist, um den Ventilkörper **(110)** mindestens teilweise zu umgeben;
einen Ventilsitz **(114),** der innerhalb des Ventilkörpers **(110)** angeordnet ist;
eine Membran **(116),** die angepasst ist, um auf dem Ventilsitz **(114)** aufgenommen zu werden, wobei die Membran **(116)** angepasst ist, um sich zwischen einer offenen Position, die einen Flüssigkeitsfluss **(F)** durch den Flüssigkeitskanal **(102)** zulässt, und einer geschlossenen Position zu bewegen, die den Flüssigkeitsfluss **(F)** durch den Flüssigkeitskanal **(102)** verhindert; und
ein elastisches Element **(118),** das zwischen dem Ventildeckel **(112)** und der Membran **(116)** angeordnet ist, wobei das elastische Element **(118)** angepasst ist, um die Membran **(116)** in die geschlossene Position vorzuspannen;
wobei die Membran **(116)** ein ungleichmäßiges Querschnittsprofil aufweist; und
wobei das ungleichmäßige Querschnittsprofil der Membran **(116)** Abrollbereiche **(117', 117")** einschließt, wobei die Abrollbereiche **(117', 117")** eine unterschiedliche Geometrie oder Wandstärke aufweisen, wobei ein erster Abrollbereich **(117')** relativ zu einem zweiten Abrollbereich **(117")** weiter hervorsteht;
**dadurch gekennzeichnet, dass:**
der Ventilsitz (114) ferner eine rechte Schulter (115') und eine linke Schulter (115") einschließt, wobei die rechte Schulter (115') ein erstes Profil einschließt und die linke Schulter (115") ein zweites Profil einschließt, sodass die rechte Schulter (115') und die linke Schulter (115") unterschiedliche Geometrien aufweisen, um die Rolle des ungleichmäßigen Querschnittsprofils zu unterstützen oder zu ergänzen, und
die rechte Schulter (115') und die linke Schulter (115") des Ventilsitzes (114) eine unterschiedliche Wandstärke, Länge oder Breite aufweisen.

2. Ventil **(100)** nach Anspruch 1, wobei ein zentraler Abschnitt der Membran **(116)** im Vergleich zu dem ersten und dem zweiten Abrollbereich **(117', 117")** eine vergrößerte Wandstärke aufweist.

3. Ventil **(100)** nach Anspruch 1 oder 2, wobei die Membran **(116)** ferner einen Verstärkungsabschnitt **(120)** einschließt.

4. Ventil **(100)** nach Anspruch 3, wobei der Verstärkungsabschnitt **(120)** und die Membran **(116)** ein einstückiges Teil ausbilden.

5. Ventil **(100)** nach Anspruch 3 oder 4, wobei mindestens eines der Membran **(116)** und des Verstärkungsabschnitts **(120)** eine Zickzackform aufweist.

6. Ventil **(100)** nach einem der Ansprüche 3 bis 5, wobei der Verstärkungsabschnitt **(120)** aus Materialien besteht, die relativ zu den Materialien, die zum Herstellen der Membran **(116)** erforderlich sind, eine höhere Festigkeit aufweisen.

7. Ventil **(100)** nach einem der Ansprüche 3 bis 6, wobei mindestens eines der Membran **(116)** und des Verstärkungsabschnitts **(120)** aus einem 2K-Formverfahren gefertigt ist.

8. Ventil **(100)** nach einem der Ansprüche 3 bis 7, wobei mindestens eines der Membran **(116)** und des Verstärkungsabschnitts **(120)** aus einem elastomeren Material gefertigt ist.

9. Ventil **(100)** nach einem der Ansprüche 3 bis 8, wobei die Membran **(116)** mittels eines Bindemittels an den Verstärkungsabschnitt **(120)** klebend gebunden ist.

10. Ventil **(100)** nach einem der Ansprüche 3 bis 9, wobei der Verstärkungsabschnitt **(120)** die Membran **(116)** darin aufnimmt.

11. Ventil **(100)** nach einem der Ansprüche 3 bis 10, wobei der Verstärkungsabschnitt **(120)** zentral auf der Membran **(116)** ruht.

12. Ventil **(100)** nach einem der Ansprüche 3 bis 11, wobei mindestens eines der Membran **(116)** und des Verstärkungsabschnitts **(120)** einen teilweisen Flüssigkeitsfluss **(F)** durch den Flüssigkeitskanal **(102)** zulässt.

## Revendications

1. Soupape **(100)** conçue pour être disposée dans un canal de liquide **(102)** comprenant :
un corps de soupape **(110) ;**
un couvercle de soupape **(112)** conçu pour entourer au moins partiellement le corps de soupape **(110)** ;
un siège de soupape **(114)** disposé à l'intérieur du corps de soupape **(110)** ;
une membrane **(116)** conçue pour être reçue sur le siège de soupape **(114),** dans laquelle la membrane **(116)** est conçue pour se déplacer entre une position ouverte permettant un écoulement de liquide **(F)** à travers le canal de liquide **(102)** et une position fermée interdisant l'écoulement de liquide **(F)** à travers le canal de liquide **(102)** ; et
un élément élastique **(118)** disposé entre le couvercle de soupape **(112)** et la membrane **(116),** dans laquelle l'élément élastique **(118)** est conçu pour solliciter la membrane **(116)** en position fermée ;
dans lequel la membrane **(116)** a un profil de section transversale non uniforme ; et
dans laquelle le profil de section transversale non uniforme de la membrane **(116)** comporte des zones de déroulement **(117', 117"),** les zones de déroulement **(117', 117")** ayant une géométrie ou une épaisseur de paroi différente, dans laquelle une première zone de déroulement **(117')** est plus saillante qu'une seconde zone de déroulement **(117")** ;
**caractérisée en ce que** :
le siège de soupape (114) comporte en outre un épaulement droit (115') et un épaulement gauche (115"), dans laquelle l'épaulement droit (115') comporte un premier profil et l'épaulement gauche (115") comporte un second profil de telle sorte que l'épaulement droit (115') et l'épaulement gauche (115") ont des géométries différentes pour soutenir ou compléter le rôle du profil de section transversale non uniforme, et
l'épaulement droit (115') et l'épaulement gauche (115") du siège de soupape (114) ont une épaisseur, une longueur ou une largeur de paroi différente.

2. Soupape **(100)** selon la revendication 1, dans laquelle une partie centrale de la membrane **(116)** a une épaisseur de paroi accrue par rapport aux première et seconde zones de déroulement **(117', 117").**

3. Soupape **(100)** selon la revendication 1 ou 2, dans laquelle la membrane **(116)** comporte en outre une partie de renforcement **(120).**

4. Soupape **(100)** selon la revendication 3, dans laquelle la partie de renforcement **(120)** et la membrane **(116)** forment une partie intégrante.

5. Soupape **(100)** selon la revendication 3 ou 4, dans laquelle au moins l'une parmi la membrane **(116)** et la partie de renforcement **(120)** a une forme en zigzag.

6. Soupape **(100)** selon l'une quelconque des revendications 3 à 5, dans laquelle la partie de renforcement **(120)** est constituée de matériaux plus résistants que les matériaux nécessaires pour faire la membrane **(116).**

7. Soupape **(100)** selon l'une quelconque des revendications 3 à 6, dans laquelle au moins l'une parmi la membrane **(116)** et la partie de renforcement **(120)** est fabriquée à partir d'un processus de moulage 2K.

8. Soupape **(100)** selon l'une quelconque des revendications 3 à 7, dans laquelle au moins l'une parmi la membrane **(116)** et la partie de renforcement **(120)** est fabriquée à partir d'un matériau élastomère.

9. Soupape **(100)** selon l'une quelconque des revendications 3 à 8, dans laquelle la membrane **(116)** est liée de manière adhésive à la partie de renforcement **(120)** au moyen d'un agent de liaison.

10. Soupape **(100)** selon l'une quelconque des revendications 3 à 9, dans laquelle la partie de renforcement **(120)** reçoit la membrane **(116)** dans celle-ci.

11. Soupape **(100)** selon l'une quelconque des revendications 3 à 10, dans laquelle la partie de renforcement **(120)** repose au centre de la membrane **(116).**

12. Soupape **(100)** selon l'une quelconque des revendications 3 à 11, dans laquelle au moins l'une parmi la membrane **(116)** et la partie de renforcement **(120)** permet un écoulement partiel de liquide **(F)** à travers le canal de liquide **(102).**
